# EUROPEAN PATENT SPECIFICATION

(11) **EP 3 725 742 B1**
(45) Date of publication and mention of the grant of the patent: **06.04.2022**
(21) Application number: 19275089.1
(22) Date of filing: 22.08.2019
(51) Int. Cl.: C01B 35/14, C07F 5/02

(54) **PREPARATION METHOD OF BORON TRIFLUORIDE DIMETHYL SULFIDE COMPLEX**
VERFAHREN ZUR HERSTELLUNG VON BORTRIFLUORID-DIMETHYLSULFID-KOMPLEXEN
PROCÉDÉ DE PRÉPARATION D'UN COMPLEXE DE SULFURE DE DIMÉTHYLE ET DE TRIFLUORURE DE BORE

(30) Priority: 19.04.2019 CN 201910317925
(43) Date of publication of application: 21.10.2020
(73) Proprietor: Shandong Heyi Gas Co., Ltd., Dongying City, Shandong Province 257500 (CN)
(72) Inventor: YANG, Jun, Dongying, Shandong (CN)
(74) Representative: Wilson Gunn

(56) References cited:
- A. A. PALKO ET AL: "Separation of Boron Isotopes. VIII. BF 3 Addition Compounds of Dimethyl Ether, Dimethyl Sulfide, Dimethyl Selenide, Dimethyl Telluride, Dibutyl Ether, and Ethyl Formate", JOURNAL OF CHEMICAL PHYSICS, vol. 46, no. 6, 15 March 1967 (1967-03-15) , pages 2297-2300, XP055677599, US ISSN: 0021-9606, DOI: 10.1063/1.1841035
- HERBERT C. BROWN ET AL: "Molecular addition compounds. 3. Redistribution of borane-methyl sulfide with boron trichloride-methyl sulfide and boron tribromide-methyl sulfide as convenient routes to the corresponding haloborane-methyl sulfides", INORGANIC CHEMISTRY, vol. 16, no. 11, 1 November 1977 (1977-11-01), pages 2938-2940, XP055677559, EASTON, US ISSN: 0020-1669, DOI: 10.1021/ic50177a054
- LAURENT ET AL: "RECHERCHES MAGNÉTOOPTIQUES SUR LA CONSTITUTION DES COMPOSÉS D'ADDITION DES HALOGÉNURES DE BORE AVEC DIVERSES MOLÉCULES ORGANIQUES [Reaction products of boron halides with various organic molecules]", ANNALES DE CHIMIE; [DOUZIÈME SÉRIE], MASSON, FR, no. 6, 1 January 1961 (1961-01-01), pages 677-731, XP008179889, ISSN: 0003-3936

## Description

### TECHNICAL FIELD

The present invention relates to the field of boron trifluoride complex preparation technologies, and in particular, to a preparation method of a boron trifluoride dimethyl sulfide complex.

### BACKGROUND

A preparation method of a boron trifluoride complex usually includes introducing boron trifluoride into liquid containing a compound at specific temperature to form a liquid or solid complex (that is, a complex of boron trifluoride and the compound). However, during preparation of a boron trifluoride dimethyl sulfide complex (that is, boron trifluoride dimethyl sulfide), when liquid dimethyl sulfide is used, boron trifluoride is introduced for complex reaction, where a reaction speed is very low, content of boron trifluoride can reach approximately 32% only when reaction is conducted for more than 24 hours, reaction efficiency is low, and a product cannot meet a content requirement of boron trifluoride used in downstream (in new material research and development, especially in a new resin material, it is required that content of boron trifluoride reach 46% to 50%). In addition, in the boron trifluoride dimethyl sulfide complex prepared by using the foregoing method, a part of boron trifluoride is still in a free state and cannot form a stable complex, and in a process of packaging and using the boron trifluoride dimethyl sulfide complex, a large amount of boron trifluoride gas escapes, easily causing personal injury and environment pollution. A. A. PALKO ET AL: "Separation of Boron Isotopes. VIII. BF 3 Addition Compounds of Dimethyl Ether, Dimethyl Sulfide, Dimethyl Selenide, Dimethyl Telluride, Dibutyl Ether, and Ethyl Formate",JOURNAL OF CHEMICAL PHYSICS, vol. 46, no. 6, 15 March 1967 (1967-03-15), pages 2297-2300,discloses vapour pressure measurements at several mol ratios of BF3 to MeS2 at temperatures in the range of -20 to +26°C. The DMS is refluxed, then BF3 is distilled directly into the reaction flask.

HERBERT C. BROWN ET AL: "Molecular addition compounds. 3. Redistribution of borane-methyl sulfide with boron trichloride-methyl sulfide and boron tribromide-methyl sulfide as convenient routes to the corresponding haloborane-methyl sulfides",INORGANIC CHEMISTRY, vol. 16, no. 11, 1 November 1977 (1977-11-01), pages 2938-294 discloses a process for the preparation of BF3·SMe2 by charging a reaction flask cooled in an ice bath with SMe2 (DMS), stirring, and passing BF3 gas in to saturation.

LAURENT ET AL: "RECHERCHES MAGNETOOPTIQUES SUR LA CONSTITUTION DES COMPOSES D'ADDITION DES HALOGENURES DE BORE AVEC DIVERSES MOLECULES ORGANIQUES [Reaction products of boron halides with various organic molecules] ",ANNALES DE CHIMIE; [DOUZIEME SÉRIE], MASSON, FR, no. 6, 1 January 1961 (1961-01-01), pages 677-731, discloses that DMS maintained at -50°C absorbs BF3 gas in equimolar amounts.

### SUMMARY

An objective of the present invention is to provide a preparation method of a boron trifluoride dimethyl sulfide complex, where the method can increase content of boron trifluoride to higher than 46%.

In order to achieve the foregoing invention objective, the present invention provides the following technical solutions:
The present invention provides a preparation method of a boron trifluoride dimethyl sulfide complex, including the following step:
conducting gas-phase complex reaction between dimethyl sulfide and boron trifluoride at 45°C to 85°C to obtain a boron trifluoride dimethyl sulfide complex.

Preferably, the preparation method specifically includes the following steps:
(1) using a reactor with a reflux condensing component as a reaction kettle, and keeping the reflux condensing component in a working state; and
(2) adding the dimethyl sulfide to the reaction kettle, heating to 45°C to 85°C, maintaining a constant-temperature condition of the reaction kettle, and introducing boron trifluoride gas until there is no reflux, to obtain the boron trifluoride dimethyl sulfide complex.

Preferably, temperature of the reflux condensing component is -30°C to 0°C.

Preferably, a molar ratio of the dimethyl sulfide to the boron trifluoride is 1:0.9-1.0.

Preferably, in step (2), stirring is maintained, and a rotation speed for stirring is 50 r/min to 100 r/min.

Preferably, the reaction kettle is a closed reaction kettle, and a flow rate of the boron trifluoride is based on constant pressure in the reaction kettle.

Preferably, the flow rate of the boron trifluoride is 30 kg/h to 120 kg/h.

Preferably, after no reflux occurs, the reaction kettle is cooled to 10°C to 30°C.

The present invention provides the preparation method of a boron trifluoride dimethyl sulfide complex, including the following step: conducting gas-phase complex reaction between dimethyl sulfide and boron trifluoride at 45°C to 85°C to obtain a boron trifluoride dimethyl sulfide complex. At 45°C to 85°C, the dimethyl sulfide is vaporized, and is subject to complex reaction with the boron trifluoride gas in a gas phase. During the complex reaction, a large amount of heat is released to generate boron trifluoride dimethyl sulfide complex gas. Because a boiling point of the boron trifluoride dimethyl sulfide complex is higher than 120°C, the boron trifluoride dimethyl sulfide complex is refluxed to the bottom of the reactor. In this case, the boron trifluoride dimethyl sulfide complex with boron trifluoride content of 48% is obtained at the bottom of the kettle.

### BRIEF DESCRIPTION OF THE DRAWINGS

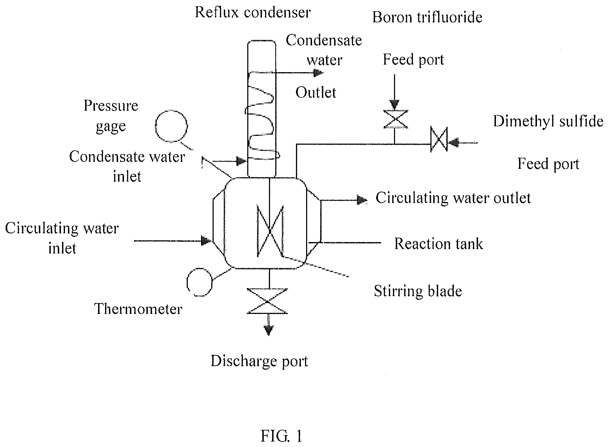

FIG. 1 shows a reactor used in an embodiment of the present invention.

### DETAILED DESCRIPTION

The present invention provides a preparation method of a boron trifluoride dimethyl sulfide complex, including the following step:
conducting gas-phase complex reaction (that is, complex reaction conducted in a gas phase) between dimethyl sulfide and boron trifluoride at 45°C to 85°C to obtain a boron trifluoride dimethyl sulfide complex.

In the present invention, the preparation method of a boron trifluoride dimethyl sulfide complex specifically includes the following steps:
(1) using a reactor with a reflux condensing component as a reaction kettle, and keeping the reflux condensing component in a working state; and
(2) adding the dimethyl sulfide to the reaction kettle, heating to 45°C to 85°C, maintaining a constant-temperature condition of the reaction kettle, and introducing boron trifluoride gas until there is no reflux, to obtain the boron trifluoride dimethyl sulfide complex.

In the present invention, the reactor with the reflux condensing component is used as a reaction kettle, and the reflux condensing component is kept in a working state; and the dimethyl sulfide is added to the reaction kettle and heated to 45°C to 85°C, the dimethyl sulfide is vaporized and refluxed and condensed in the reflux condensing component, the boron trifluoride gas is introduced, and vaporized dimethyl sulfide is subject to complex reaction with the boron trifluoride gas in a gas phase. During the complex reaction, a large amount of heat is released to generate boron trifluoride dimethyl sulfide complex gas, and then the boron trifluoride dimethyl sulfide complex gas is condensed in the reflux condensing component and refluxed to the bottom of the reactor. A boiling point of the boron trifluoride dimethyl sulfide complex is higher than 120°C, and therefore the boron trifluoride dimethyl sulfide complex cannot be vaporized at 45°C to 85°C. Therefore, when there is no reflux, it indicates that the dimethyl sulfide has completely reacted.

In the present invention, the reactor with the reflux condensing component is used as a reaction kettle, and the reflux condensing component is kept in a working state.

In the present invention, temperature of the reflux condensing component is preferably -30°C to 0°C, and cooling water in the reflux condensing component is an ethylene glycol aqueous solution.In the present invention, in a subsequent step, the reflux condensing component can be used for reflux and condensation of unreacted dimethyl sulfide and can also be used for reflux and condensation of boron trifluoride dimethyl sulfide complex gas.

In this embodiment of the present invention, the reactor used is shown in FIG. 1. A reflux condenser is disposed at an upper part of the reactor and is used for condensing a vaporized material; a reaction tank of the reactor is a jacket-type reaction tank, and circulating water can be introduced into the reaction tank for heating or cooling the reaction tank; a stirring blade is disposed in the reaction tank and can be used for stirring reaction liquid; a thermometer and a pressure gage are also disposed in the reaction tank and are used for monitoring reaction temperature and pressure; dimethyl sulfide and boron trifluoride enter the reaction tank through one feed pipe; and after the reaction is completed, a product is discharged from a discharge port.

In the present invention, when the reflux condensing component is in a working state, the dimethyl sulfide is added to the reaction kettle and heated to 45°C to 85°C, a constant-temperature condition of the reaction kettle is maintained, and boron trifluoride gas is introduced until there is no reflux, to obtain the boron trifluoride dimethyl sulfide complex.

In the present invention, a molar ratio of the dimethyl sulfide to the boron trifluoride is 1:0.9-1.0.

In the present invention, after the dimethyl sulfide is added, stirring is maintained, and a rotation speed for stirring is preferably 50 r/min to 100 r/min.

In the present invention, the reaction kettle is preferably a closed reaction kettle, and a flow rate of the boron trifluoride is preferably based on constant pressure in the reaction kettle. In an embodiment of the present invention, the flow rate of the boron trifluoride is preferably 30 kg/h to 120 kg/h.

In the present invention, a time required from introduction of the boron trifluoride gas to completion of the reaction is preferably 0.8 h to 1.2 h.

In the present invention, after no reflux occurs, the reaction kettle is preferably cooled to 10°C to 30°C to obtain the boron trifluoride dimethyl sulfide complex.

With reference to embodiments, the following describes in detail a preparation method of a boron trifluoride dimethyl sulfide complex provided in the present invention, but the embodiments cannot be understood as a limitation on the protection scope of the present invention.

### Embodiment 1

A boron trifluoride dimethyl sulfide complex is prepared by using the device shown in FIG. 1. The reflux condenser is opened, -5°C cooling water (ethylene glycol aqueous solution) is introduced into the reflux condenser, and the reflux condenser is kept in a working state; 50 kg of dimethyl sulfide is added into the reactor and is stirred at a rotation speed of 50 r/min, and the reaction tank is heated to 45°C to generate reflux; 51.4 kg of boron trifluoride gas is introduced into the reactor at a speed of 30 kg/h to 120 kg/h, where pressure in the reaction tank keeps unchanged during introduction of the boron trifluoride gas; the reaction is completed when no reflux is generated in the reactor, where a time required from introduction of the boron trifluoride gas to stopping of reflux is 1.2 h; and the reaction tank is cooled to 20°C to 25°C, and the material is discharged to obtain 100.8 kg of the boron trifluoride dimethyl sulfide complex, which is colorless and transparent liquid. Through calculation, a yield (that is, a result obtained by dividing the total mass of raw materials from the mass of the product) is 99.4%, and it is detected through a weight loss method that content of boron trifluoride in the product is 49.3%.

### Embodiment 2

A boron trifluoride dimethyl sulfide complex is prepared by using the device shown in FIG. 1. The reflux condenser is opened, -15°C cooling water (ethylene glycol aqueous solution) is introduced into the reflux condenser, and the reflux condenser is kept in a working state; 50 kg of dimethyl sulfide is added into the reactor and is stirred at a rotation speed of 100 r/min, and the reaction tank is heated to 60°C to generate reflux; 51.4 kg of boron trifluoride gas is introduced into the reactor at a speed of 30 kg/h to 120 kg/h, where pressure in the reaction tank keeps unchanged during introduction of the boron trifluoride gas, the reaction is completed when no reflux is generated in the reactor, and a time required from introduction of the boron trifluoride gas to stopping of reflux is 1 h; the reaction tank is cooled to 20°C to 25°C, and the material is discharged to obtain 101.2 kg of the boron trifluoride dimethyl sulfide complex, which is colorless and transparent liquid. Through calculation, a yield (that is, a result obtained by dividing the total mass of raw materials from the mass of the product) is 99.8%, and it is detected through a weight loss method that content of boron trifluoride in the product is 48.5%.

### Embodiment 3

A boron trifluoride dimethyl sulfide complex is prepared by using the device shown in FIG. 1. The reflux condenser is opened, -30°C cooling water (ethylene glycol aqueous solution) is introduced into the reflux condenser, and the reflux condenser is kept in a working state; 50 kg of dimethyl sulfide is added into the reactor and is stirred at a rotation speed of 75 r/min, and the reaction tank is heated to 80°C to generate reflux; 51.4 kg of boron trifluoride gas is introduced into the reactor at a speed of 30 kg/h to 120 kg/h, where pressure in the reaction tank keeps unchanged during introduction of the boron trifluoride gas, the reaction is completed when no reflux is generated in the reactor, and a time required from introduction of the boron trifluoride gas to stopping of reflux is 0.8 h; the reaction tank is cooled to 20°C to 25°C, and the material is discharged to obtain 100.5 kg of the boron trifluoride dimethyl sulfide complex, which is colorless and transparent liquid. Through calculation, a yield (that is, a result obtained by dividing the total mass of raw materials from the mass of the product) is 99.1%, and it is detected through a weight loss method that content of boron trifluoride in the product is 49%.

It can be learned from the foregoing embodiments that, content of boron trifluoride in the boron trifluoride dimethyl sulfide complex obtained by using the preparation method of a boron trifluoride dimethyl sulfide complex provided in the present invention can reach higher than 48%, and is close to a theoretical value (52.26%).

## Claims

1. A preparation method of a boron trifluoride dimethyl sulfide complex, comprising the following step:
conducting gas-phase complex reaction between dimethyl sulfide and boron trifluoride at 45°C to 85°C to obtain a boron trifluoride dimethyl sulfide complex.

2. The preparation method according to claim 1, wherein the preparation method specifically comprises the following steps:
(1) using a reactor with a reflux condensing component as a reaction kettle, and keeping the reflux condensing component in a working state; and
(2) adding the dimethyl sulfide to the reaction kettle, heating to 45°C to 85°C, maintaining a constant-temperature condition of the reaction kettle, and introducing boron trifluoride gas until there is no reflux, to obtain the boron trifluoride dimethyl sulfide complex.

3. The preparation method according to claim 2, wherein temperature of the reflux condensing component is -30°C to 0°C.

4. The preparation method according to claim 1 or 2, wherein a molar ratio of the dimethyl sulfide to the boron trifluoride is 1:0.9-1.0.

5. The preparation method according to claim 2, wherein in step (2), stirring is maintained, and a rotation speed for stirring is 50 r/min to 100 r/min.

6. The preparation method according to claim 2, wherein the reaction kettle is a closed reaction kettle, and a flow rate of the boron trifluoride is based on constant pressure in the reaction kettle.

7. The preparation method according to claim 6, wherein the flow rate of the boron trifluoride is 30 kg/h to 120 kg/h.

8. The preparation method according to claim 2, wherein after no reflux occurs, the reaction kettle is cooled to 10°C to 30°C.

## Patentansprüche

1. Verfahren zur Herstellung eines Bortrifluoriddimethylsulfidkomplexes, umfassend die folgenden Schritte:
Durchführen einer Gasphasenkomplexreaktion zwischen Dimethylsulfid und Bortrifluorid bei 45°C bis 85°C, um einen Bortrifluoriddimethylsulfidkomplex zu erhalten.

2. Herstellungsverfahren nach Anspruch 1, wobei das Herstellungsverfahren spezifisch die folgenden Schritte umfasst:
(1) Verwenden eines Reaktors mit einer Rücklaufkondensatorkomponente als ein Reaktionsgefäß, und Halten der Rücklaufkondensatorkomponente in einem Arbeitszustand; und
(2) Hinzufügen des Dimethylsulfids zu dem Reaktionsgefäß, Heizen auf 45°C bis 85°C, Aufrechterhalten eines Zustands des Reaktionsgefäßes mit konstanter Temperatur, und Einführen von Bortrifluoridgas, bis kein Rücklauf auftritt, um den Bortrifluoriddimethylsulfidkomplex zu erhalten.

3. Herstellungsverfahren nach Anspruch 2, wobei die Temperatur der Rücklaufkondensatorkomponente -30°C bis 0°C ist.

4. Herstellungsverfahren nach Anspruch 1 oder 2, wobei ein molares Verhältnis des Dimethylsulfids zu dem Bortrifluorid 1:0,9 - 1,0 ist.

5. Herstellungsverfahren nach Anspruch 2, wobei im Schritt (2) ein Rühren beibehalten wird, und eine Drehgeschwindigkeit zum Rühren 50 r/min bis 100 r/min ist.

6. Herstellungsverfahren nach Anspruch 2, wobei das Reaktionsgefäß ein geschlossenes Reaktionsgefäß ist, und eine Fließrate des Bortrifluorids auf einem konstanten Druck in dem Reaktionsgefäß basiert.

7. Herstellungsverfahren nach Anspruch 6, wobei die Fließrate des Bortrifluorids 30 kg/h bis 120 kg/h ist.

8. Herstellungsverfahren nach Anspruch 2, wobei das Reaktionsgefäß auf 10°C bis 30°C abgekühlt wird, nachdem kein Rücklauf auftritt.

## Revendications

1. Procédé de préparation d'un complexe de trifluorure de bore-diméthyl sulfure comprenant l'étape suivante :
réalisation d'une réaction complexe en phase gazeuse entre le diméthyl sulfure et le trifluorure de bore à 45 °C à 85 °C pour obtenir un complexe de trifluorure de bore-diméthyl sulfure.

2. Procédé de préparation selon la revendication 1, dans lequel le procédé de préparation comprend spécifiquement les étapes suivantes :
(1) utilisation d'un réacteur avec un composant de condensation à reflux en tant que cuve de réaction, et maintien du composant de condensation à reflux dans un état de travail ; et
(2) ajout du diméthyl sulfure à la cuve de réaction, chauffage à 45 °C à 85 °C, maintien d'une condition de température constante de la cuve de réaction, et introduction de gaz de trifluorure de bore jusqu'à ce qu'il n'y ait plus de reflux, pour obtenir le complexe trifluorure de bore - diméthyl sulfure.

3. Procédé de préparation selon la revendication 2, dans lequel la température du composant de condensation à reflux est de -30 °C à 0 °C.

4. Procédé de préparation selon la revendication 1 ou 2, dans lequel un rapport molaire du diméthyl sulfure sur le trifluorure de bore est de 1/0,9-1,0.

5. Procédé de préparation selon la revendication 2, dans lequel à l'étape (2), l'agitation est maintenue, et une vitesse de rotation pour l'agitation est de 50 tr/min à 100 tr/min.

6. Procédé de préparation selon la revendication 2, dans lequel la cuve de réaction est une cuve de réaction fermée, et un débit du trifluorure de bore est basé sur une pression constante dans la cuve de réaction.

7. Procédé de préparation selon la revendication 6, dans lequel le débit du trifluorure de bore est de 30 kg/h à 120 kg/h.

8. Procédé de préparation selon la revendication 2, dans lequel lorsque plus de reflux ne se produit, la cuve de réaction est refroidie à 10 °C à 30 °C.
